Europäisches Patentamt

European Patent Office

Office européen des brevets

(11) Publication number: **0 291 601 B1**

(12) **EUROPEAN PATENT SPECIFICATION**

(45) Date of publication of patent specification: **20.03.91**

(51) Int. Cl.⁵: **E04C 5/12, B29C 63/00, B29C 67/14**

(21) Application number: **87308461.0**

(22) Date of filing: **24.09.87**

(54) Methods of manufacturing multi-type fixing tools for prestressed concrete.

(30) Priority: **21.05.87 JP 124537/87**

(43) Date of publication of application:
**23.11.88 Bulletin 88/47**

(45) Publication of the grant of the patent:
**20.03.91 Bulletin 91/12**

(84) Designated Contracting States:
**BE DE FR GB IT NL**

(56) References cited:
**EP-A- 0 098 927
CA-A- 1 167 676
DE-A- 1 759 810
DE-A- 2 705 483
GB-A- 2 163 736**

(73) Proprietor: **MITSUBISHI MINING & CEMENT
CO., LTD.**
**5-1, Marunouchi 1-chome Chiyoda-ku
Tokyo 100(JP)**

Proprietor: **KINPO DENKI KABUSHIKI KAISHA**
**5-11-7, Nishi Nippori Arakawa-ku
Tokyo(JP)**

(72) Inventor: **Sasaki, Hiroshi c/o Ohmiya Ken-
kyujo, Mitsubishi
Mining & Cement Co. Ltd. 1-297, Kita
Fukuromachi Ohmiya-shi Saitama-ken(JP)**
Inventor: **Ohta, Saburo**
**4-20-17, Tabata Kita-ku
Tokyo(JP)**
Inventor: **Kanesaka, Sen-ichi**
**1-23-8, Tamagawa-cho
Akishima-shi Tokyo(JP)**
Inventor: **Hirota, Takao**
**3-16-4, Shimo-ochiai Shinjuku-ku
Tokyo(JP)**

(74) Representative: **Targett, Kenneth Stanley et al
D. Young & Co. 10 Staple Inn
London WC1V 7RD(GB)**

## Description

This invention relates to methods of manufacturing multi-type fixing tools for prestressed concrete.

Prestressed concrete, as is generally known, is a concrete product that is fabricated under a compression load. In order to apply this compression load, it is known to provide a concrete body with a longitudinal penetration hole into which a steel wire is inserted. According to this method, both ends of this wire are fixed by means of fixing tools on to respective ends of the concrete body, after tension has been applied to the wire. Many types of such fixing tools have been previously proposed.

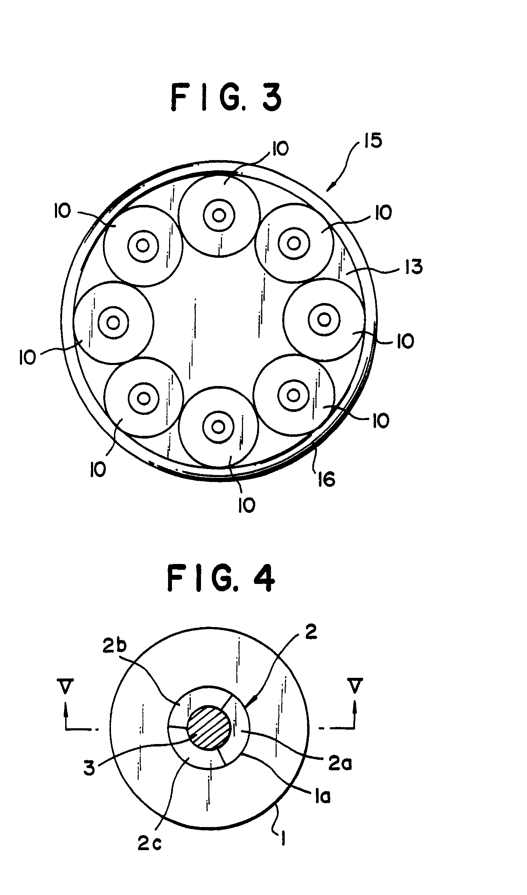

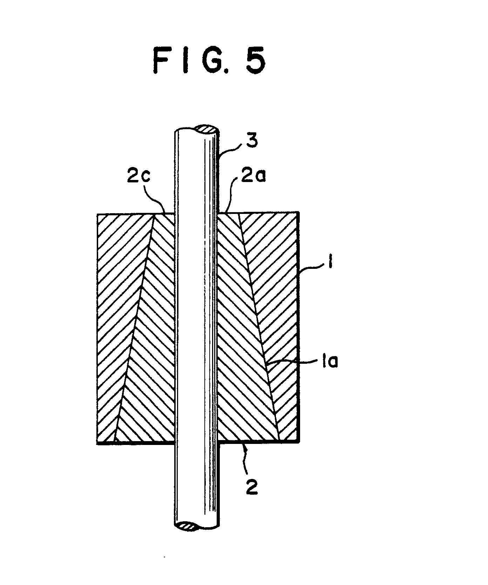

Figure 4 of the accompanying drawings is a plan view showing an example of such a fixing tool, while Figure 5 of the accompanying drawings details a sectional view along the line V-V of Figure 4. An outer cone 1 is provided with a tapered hole 1a. An inner cone 2 is engaged in the hole 1a, being in the form of a frustrum of right circular cone shape. The inner cone 2 is provided with a central hole of uniform diameter and is divided into three wedges 2a, 2b and 2c. A wire 3 is inserted through the central hole of the inner cone 2, and is prevented from free movement by the tightening force of the wedges 2a, 2b and 2c; thus the wire 3 is fixed in place.

Various other types of fixing tool are known, such as those designed or made by Hochtief, Bilfinger, Held u. Franke, Moraudi or Bauwens.

Accordingly, it will be apparent that many types of construction and configuration of fixing tools are available. However, steel is mostly used as a material for these fixing tools because of the high strength which is required. A fixing tool made of steel has satisfactory durability in normal operating environments but, in a more corrosive atmosphere, it is often subject to rust thereby deteriorating in strength as well as adversely affecting the surrounding concrete due to spread of the rust. For instance, rusting may be associated with volumetric swelling resulting in fine cracks in the concrete. Accordingly, one disadvantage associated with prestressed concrete has been that, where it is introduced into a marine or seaside structure, for example, the prestress is often degraded earlier than in a less hostile environment.

In order to overcome this problem, a fixing tool has been proposed, in Japanese Tokkaisyo 62-63746, in which glass and carbon fibres are used as reinforcing members with a binder of a thermosetting synthetic resin.

A fixing tool as proposed in Japanese Tokkaisyo 62-63746 is extremely corrosion resistive. However, one disadvantage associated with the fixing tool is that, where several wires are inserted into the concrete body, the same number of fixing tools as the number of the wires must be utilised while performing spanning for each wire.

According to the present invention there is provided a method of manufacturing a multi-type fixing tool for prestressed concrete, in which a plurality of fixing tool units each comprising a fibre reinforced thermosetting synthetic resin is inserted into a cylindrical mould while the directions of said units are maintained parallel to the axial direction of said mould, a fiber-reinforced thermosetting resin solution is introduced into said mould, after hardening of said thermosetting resin said mould is removed leaving a cylindrical moulded shape, a fibre is wrapped around the cylindrical surface of said moulded shape with a thermosetting synthetic resin solution being impregnated in the fibre, and the impregnated resin solution is hardened, thereby to provide a multi-type fixing tool comprising an integrated plurality of said fixing tool units.

The fibre may be wrapped in a biased manner or radially, and singly or alternately in multiple layers.

The invention will now be described by way of example with reference to the accompanying drawings, throughout which like parts are referred to by like references, and in which:

Figures 1 and 2 show a method of manufacturing a multi-type fixing tool according to one embodiment of the present invention;

Figure 3 is a plan view showing an example of a multi-type fixing tool fabricated according to the preferred method of the present invention;

Figure 4 is a plan view of one type of fixing tool unit; and

Figure 5 shows a partial cutaway view along the line V-V of Figure 4.

According to a manufacturing method embodying this invention, a plurality of fibre reinforced thermosetting synthetic resin fixing tool units is fabricated into one body. The thermosetting synthetic resins applicable to such fixing tool units should preferably be minimally deformable by external stress while being effective in resistance to weather and chemicals. Such resins include, for example, epoxy acrylate resin, phenol resin and amino resin.

Fibre to be used for reinforcing such a thermosetting synthetic resin may be any one of various inorganic fibres, organic fibres or carbon fibres, either singly or combined in use. More preferably carbon fibre is used. In that case, long fibres each having a diameter of 5 to 10 $\mu$m are advantageous. When the diameter of the carbon fibres is smaller than the above, the cost is increased, while carbon fibres of a larger diameter have poor flexibility.

Each unit of the fixing tool, consisting of a shaped resin, can be fabricated by a suitable method such as the so-called filament winding method. In addition, cloths or sheets of carbon fibre may be laminated and impregnated with a thermosetting synthetic resin. At that time, compression forming may be applied to produce a moulded shape of extremely high strength.

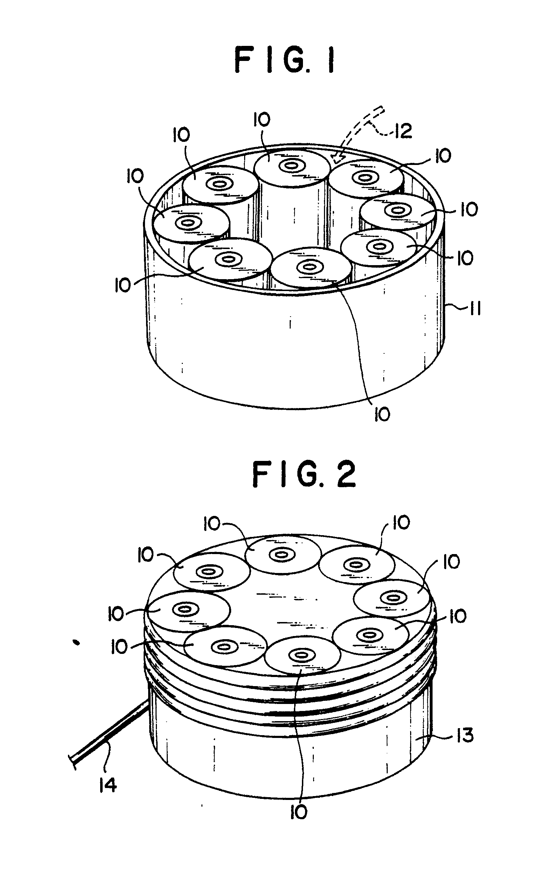

Referring to the drawings, a plurality of fixing tool units 10, more preferably three to eight units are mounted in a cylindrical mould 11 as shown in Figure 1. Figures 1 to 3 show one type of fixing tool unit which can be used in the tool of Figures 4 and 5. However, other types of fixing tool unit can alternatively be utilised. As the fixing tool units 10 are introduced, the axial direction of the mould 11 is maintained parallel to the axial directions of the fixing tool units 10. More preferably, the fixing tool units 10, arranged in a circle, contact each other at the inner periphery.

Thermosetting synthetic resin solution 12 including chopped strand fibre is then poured into the space formed between the fixing tool units 10 and the mould 11 and between each fixing tool unit 10; the resin solution is then hardened. The fibre may consist of an inorganic fibre, an organic fibre, a carbon fibre or a combination of two or more of these fibres. However, chopped strand carbon fibre is preferred since it has higher strength. The thermosetting synthetic resin may also be epoxy acrylate resin, phenol resin, amino resin or the like.

The hardened assembly is then removed from the mould 11 as a completed cylindrical shape 13. Next, fibre 14 is wrapped around the side or cylindrical surface of this moulded shape 13, as shown in Figure 2, while impregnating the fibre 14 with a thermosetting synthetic resin. It is preferable that this wrapping is carried out radially or in a bias manner where the direction of wrapping in each layer is alternated, thereby forming multiple layers. In addition, radial wrapping and bias wrapping may apply alternately. The wrapping fibre may be an inorganic fibre such as glass fibre or an organic fibre such as carbon fibre or amide fibre (trade mark: Kevlar).

The impregnating thermosetting synthetic resin may advantageously be epoxy acrylate resin, phenol resin, amino resin or the like.

By hardening the impregnated thermosetting synthetic resin, the multi-type fixing tool 15 is fabricated. Figure 3 shows a plan view of the multi-type fixing tool 15 fabricated in this way, the resin impregnated fibre layer 16 being wrapped around the side or cylindrical surface of the moulded shape 13.

In addition, a pigment or powder filler may also be mixed in the thermosetting synthetic resin.

The multi-type fixing tool, as described above, is consolidated into one body consisting of a plurality of the fixing tool units made of a fibre reinforced thermosetting synthetic resin with a binder of a thermosetting synthetic resin, and around which a fibre is firmly wrapped. Thus, a plurality of wires can be tightened at once using the same tensioning device.

Compared to previously-proposed fixing tools made of steel, the above-described multi-type fixing tool has improved strength and durability and can more advantageously be used even in severe corrosive environments such as marine and seaside installations without significant deterioration over long periods of time.

The fabrication of one specific embodiment of the invention will now be described.

(1) Fabrication of the outer cone.

20 weight parts of epoxy acrylate resin (trade mark: "Lypoxy", supplied by Showa Kobunshi Co., Ltd.) was mixed with 0.2 weight parts of hardener, 1 weight of pigment and 1 weight part of silica, the mixture being agitated using an agitator. Then, 80 weight parts of carbon fibre was wrapped on to a filament winding machine while impregnating the resin up to a specified thickness, the impregnated resin being taken out and hardened first for 1 hour at between 100 and 110°C and then for 3 hours at between 110 and 160°C in a constant temperature oven. The approximate dimensions of the cone included an outer diameter of 40 mm, a length of 60 mm and a minimum inner diameter of 16 mm with a taper angle of 15°.

(2) Fabrication of the inner cone.

20 weight parts of epoxy acrylate resin (trade mark: "Lypoxy", supplied by Showa Kobunshi Co., Ltd) was mixed with 0.2 weight parts of hardener and 1 weight part of pigment, the mixture being agitated using an agitator. Carbon fibre was randomly impregnated with the mixture, poured into a mould and hardened for 3 minutes under pressure at between 150 and 170°C.

(3) Insertion into the mould and forming.

The outer cone and the inner cone, fabricated according to the processes (1) and (2), were combined to form fixing tool units, eight of which were arranged concentrically in a circle in a mould having an inner diameter of 140 mm. A mixture of 20 weight parts of epoxy acrylate resin, 0.2 weight parts of hardener, 1 weight part of pigment and 20 weight parts of chopped strand carbon fibre in 10 mm lengths was then poured as a mixed solution into the mould, heated at 150°C for hardening, and then demoulded thereby forming a cylindrical moulded shape.

(4) Wrapping of fibre.

Carbon fibre robing or sheet (count: No. 400) was wrapped in a bias manner at a rate of 300 wrappings per layer on to the moulded shape up to a total of 50 layers while impregnating with epoxy acrylate resin (including a hardener). The resulting assembly was heated at 150°C for hardening the resin, thus fabricating the multi-type fixing tool.

The multi-type fixing tool as fabricated above showed a rupture strength higher than about 10⁴ kg (10 tons) when tensioning a wire.

## Claims

1. A method of manufacturing a multi-type fixing tool (15) for prestressed concrete, in which a plurality of fixing tool units (10) each comprising a fibre reinforced thermosetting synthetic resin is inserted into a cylindrical mould (11) while the directions of said units (10) are maintained parallel to the axial direction of said mould (11), a fiber reinforced thermosetting resin solution (12) is introduced into said mould (11), after hardening of said thermosetting resin said mould (11) is removed leaving a cylindrical moulded shape (13), a fibre (14) is wrapped around the cylindrical surface of said moulded shape (13) with a thermosetting synthetic resin solution being impregnated in the fibre (14), and the impregnated resin solution is hardened, thereby to provide a multi-type fixing tool (15) comprising an integrated plurality of said fixing tool units (10).

2. A method according to claim 1, in which the fibre (14) is wrapped in a biased manner in multiple layers around the surface of said moulded shape (13).

3. A method according to claim 1, in which the fibre (14) is wrapped radially in multiple layers around the surface of said moulded shape (13).

4. A method according to claim 1, in which the fibre (14) is wrapped alternately in a biasing and a radial manner in multiple layers around the surface of said moulded shape (13).

## Revendications

1. Procédé de fabrication d'un dispositif d'ancrage (15) d'une pluralité d'éléments pour béton précontraint, dans lequel une pluralité d'éléments d'ancrage (10) comprenant chacun une résine synthétique thermodurcissable renforcée par fibres sont insérés dans un moule cylindrique (11) tandis que le sens axial desdits éléments (10) est maintenu parallèle au sens axial dudit moule (11), une solution de résine thermodurcissable renforcée par fibres (12) est introduite dans ledit moule (11), après le durcissement de ladite résine thermodurcissable ledit moule (11) est ôté, laissant une forme moulée cylindrique (13), une fibre (14) est enroulée autour de la surface cylindrique de ladite forme moulée (13) avec une solution de résine synthétique thermodurcissable étant imprégnée dans la fibre (14), et la solution de résine imprégnée est durcie, afin de fournir un dispositif d'ancrage d'une pluralité d'éléments (15) comprenant une pluralité intégrée desdits éléments d'ancrage (10).

2. Procédé selon la revendication 1, dans lequel la fibre (14) est enroulée en biais en couches multiples autour de la surface de ladite forme moulée (13).

3. Procédé selon la revendication 1, dans lequel la fibre (14) est enroulée radialement en couches multiples autour de la surface de ladite forme moulée (13).

4. Procédé selon la revendication 1, dans lequel la fibre (14) est enroulée tour à tour en biais et radialement en couches multiples autour de la surface de ladite forme moulée (13).

## Ansprüche

1. Verfahren zum Herstellen einer Mehrfachbefestigungsvorrichtung (15) für Spannbeton, bei welcher eine Mehrzahl von Befestigungselementen (10), welche jeweils ein faserverstärktes, unter Wärme abbindendes, synthetisches Kunstharz aufweisen, in eine zylindrische Form (11) eingesetzt werden, wobei die Richtungen der Elemente (10) parallel zur Axialrichtung der Form (11) aufrecht erhalten werden, eine faserverstärkte, unter Wärme abbindende Kunstharzlösung (12) in die Form (11) eingegeben wird, nach dem Aushärten des unter Wärme abbindenden Kunstharzes die Form (11) entfernt wird und eine zylindrisch geformte Gestalt (13) hinterläßt, eine Faser (14) um die zylindrische Oberfläche der gegossenen Gestalt (13) herumgewickelt wird, wobei die Faser (14) mit einer unter Wärme abbindenden synthetischen Kunstharzlösung imprägniert ist, die imprägnierte Kunstharzlösung aushärtet und dadurch eine Mehrfachbefestigungsvorrichtung (15) bereitgestellt wird, welche eine Mehrzahl integrierter Befestigungselemente (10) aufweist.

2. Verfahren nach Anspruch 1, bei welchem die Faser (14) schräg in mehreren Schichten um die Oberfläche der gegossenen Gestalt (13) herumgewickelt wird.

3. Verfahren nach Anspruch 1, bei welchem die Faser (14) in radialer Richtung in mehreren Schichten um die Oberfläche der gegossenen Gestalt (13) herum gewickelt wird.

4. Verfahren nach Anspruch 1, bei welchem die Faser (14) abwechselnd schräg und in radialer Weise in mehreren Schichten um die Oberfläche der gegossenen Gestalt (13) herum gewickelt wird.

# F I G. 1

# F I G. 2

# F I G. 3

# F I G. 4

# F I G. 5